# EUROPÄISCHE PATENTSCHRIFT

(11) **EP 2 419 383 B1**
(45) Veröffentlichungstag und Bekanntmachung des Hinweises auf die Patenterteilung: **18.09.2013**
(21) Anmeldenummer: 10720708.6
(22) Anmeldetag: 03.04.2010
(51) Int. Cl.: C02F 3/28, C02F 3/34, C02F 1/62, C02F 1/20, C02F 9/00, C02F 101/20, C02F 101/10, C02F 103/18

(54) **VERFAHREN ZUR ENTFERNUNG VON SCHWERMETALL- UND SULFATIONEN AUS HOCHKONZENTRIERTEN, SCHWERMETALLHALTIGEN UND STARK SAUREN LÖSUNGEN**
METHOD FOR REMOVING HEAVY METAL AND SULFATE IONS FROM HIGHLY CONCENTRATED, HEAVY METAL-CONTAINING AND STRONGLY ACIDIC SOLUTIONS
PROCÉDÉ D'ÉLIMINATION D'IONS DE MÉTAUX LOURDS ET DE SULFATE DE SOLUTIONS FORTEMENT ACIDES ET HAUTEMENT CONCENTRÉES, CONTENANT DES MÉTAUX LOURDS

(30) Priorität: 18.04.2009 DE 102009017958
(43) Veröffentlichungstag der Anmeldung: 22.02.2012
(73) Patentinhaber: EnviroChemie GmbH, 64380 Rossdorf (DE)
(72) Erfinder: DINKEL, Waldemar, 34125 Kassel (DE); FRECHEN, Franz-Bernd, 34128 Kassel (DE)
(74) Vertreter: Köllner, Malte
(86) Internationale Anmeldenummer: PCT/DE2010/000394
(87) Internationale Veröffentlichungsnummer: WO 2010/118730

(56) Entgegenhaltungen:
- EP-B1- 1 578 697
- WO-A1-80/02281
- WO-A1-97/29055
- AU-B2- 759 811
- DE-A1-102006 038 207
- US-A1- 2007 090 057
- US-B1- 6 197 196

## Beschreibung

Die vorliegende Erfindung betrifft ein Verfahren zur Entfernung von Schwermetall- und Sulfationen aus hochkonzentrierten, schwermetallhaltigen und stark sauren Lösungen, insbesondere von Lösungen aus der Rauchgasentschwefelungsanlage, umfassend einen Bioreaktor mit Sulfat reduzierenden Bakterien, wobei die im Bioreaktor aus der sulfathaltigen Lösung (Abwasser) erzeugten Sulfide einem Mischbehälter zugeführt werden.

Es sind unterschiedliche Verfahren zur Entfernung von Schwermetallionen aus schwermetallhaltigen Lösungen bekannt. So ist z. B. ein Verfahren zur Ausfällung von Schwermetall- und Sulfationen aus Abwassern aus der WO 80/02281 A1 bekannt. Nach diesem Verfahren wird ein Teil des zu reinigenden Abwassers in einen Bioreaktor gefördert. Der Ablauf aus dem Bioreaktor enthält Sulfid, das durch die Tätigkeit der Sulfat reduzierenden Bakterien (SRB) erzeugt worden ist. Dieses Sulfid wird kontinuierlich in einem Ausfällungsbehälter zusammen mit dem verbleibenden Teil des Abwassers vermischt. Anschließend werden die Schwermetallionen als Metallsulfide aus dem System entfernt. Jedoch ist es mit diesem bekannten Prozess lediglich möglich, Abwasser bis zu einer maximalen für die verwendete Biomasse nicht schädlichen Schwermetallkonzentration zu behandeln. Üblicherweise wird eine feste Aufteilung der Abwasserströme eingestellt. Da ein Überschuss an Sulfiden vorhanden sein soll, um die Restkonzentration von Schwermetallionen unterhalb der Einleitungsgrenze zu halten, kann eine Überschreitung des Einleitungsgrenzwertes für Sulfid auftreten. Um den Überschuss von Sulfiden zu eliminieren, ist es erforderlich, weitere Behandlungsschritte vorzusehen.

Aus der JP-A-6034706 ist bekannt, schwermetallhaltige Abwasser mit einem Teil eines H₂S-haltigen Abflusses des Bioreaktors zu vermischen, wobei unlösliche Metallsulfide gebildet werden. Nach dem Reaktor werden Metallsulfide und Bakterienschlamm abgetrennt. Der Bakterienschlamm wird bei der Behandlung wiederverwendet. Nachteilig an diesem Verfahren ist die Hemmung des Bakterienwachstums, wenn der Zulauf lösliche Salze in hohen Konzentrationen enthält, und die Sulfide nicht alle toxischen Substanzen eliminieren. Weiterhin ist es mit diesem Verfahren nicht möglich, die Schwermetalle selektiv auszufällen, so dass sie wiederverwendet werden könnten.

Ein weiteres Verfahren ist aus der WO 97/29055 A1 bekannt. Nach diesem Verfahren wird ein mikrobiologisch hergestelltes Sulfid der metallhaltigen Lösung zugeführt, wobei die Metallsulfide vor der biologischen Sulfatreduktionsstufe aus der zu behandelnden Lösung abgetrennt werden. Dieses bekannte Verfahren hat allerdings den Nachteil, dass die gesamte zu behandelnde Lösung den Bioreaktor passieren muss. Dies führt dann zu einer Schädigung der Bakterien, wenn die zu behandelnde Lösung toxische Substanzen und/oder hoch konzentrierte lösliche Salze enthält. Weiterhin muss der pH-Wert der Lösung nach dem selektiven Ausfällen von Metallen wieder auf das optimale Niveau für die Biomasse gebracht werden, was mit zusätzlichen Kosten verbunden ist. Der Überschuss an Sulfiden im Ablauf des Bioreaktors verlangt darüber hinaus zusätzliche Behandlungsschritte, um ihn zu eliminieren. Zudem wird die Sulfitproduktion der Biomasse von der erhöhten Sulfidkonzentration im Zulauf negativ beeinträchtigt.

Des Weiteren ist aus der EP 1 587 697 B1 ein Verfahren zur Entfernung von Schwermetallionen aus hoch konzentrierten, schwermetallhaltigen Lösungen der eingangs genannten Art bekannt. Hierbei wird dem Bioreaktor ein Pufferbehälter vorgeschaltet, der eine schwermetallhaltige Lösung mit einer relativ gesehen geringeren Konzentration, bezogen auf die Gesamtschwermetallionenkonzentration aufnimmt, wobei dem Mischbehälter ein Pufferbehälter vorgeschaltet ist, der eine schwermetallhaltige Lösung etwa höherer Konzentration, bezogen auf die Gesamtschwermetallionenkonzentration aufnimmt, wobei die Lösung geringerer Konzentration dem Bioreaktor, und die Lösung der höheren Konzentration dem Mischbehälter zugeführt wird. Mit diesem Verfahren ist es möglich, hoch konzentrierte, schwefel- und schwermetallhaltige Lösungen derart zu reinigen, dass im Wesentlichen kein Sulfid in das Abwassemetz gelangt.

Nachteilig an den bekannten Verfahren ist allerdings, dass es nicht die Gewinnung von Schwefelverbindungen aus den stark sauren, wässrigen, hoch konzentrierten, schwefel- und schwermetallhaltigen Lösungen ermöglicht, wie sie als Abwasser, insbesondere aus Rauchgasentschwefelungsanlagen zur Verfügung stehen. Bekannt ist, mit Hilfe von anaeroben, Sulfat reduzierenden Bakterien der Gattung Desulfovibrio Barsi, Desulfovibrio sp, Desulfomikrobiom sp und Desulfotomaculum sp aus schwermetallhaltigen, sulfathaltigen Lösungen Metallsulfide zu bilden. Die Erzeugung solcher Sulfide erfolgt allgemein in Bioreaktoren unter Zuhilfenahme von entsprechenden Bakterien, und hier insbesondere von Bakterienstämmen der zuvor genannten Art. Bekannt ist, dass solche Bakterien sehr empfindlich reagieren, wenn die zu behandelnde Lösung toxische Substanzen, Säuren, Laugen oder hoch konzentrierte lösliche Salze enthält. Das bedeutet, dass dann die im Bioreaktor vorhandenen Bakterienstämme gegebenenfalls vernichtet bzw. zumindest in ihrer Sulfitproduktion gehemmt sind.

Unter Berücksichtigung der zuvor genannten Ausführungen besteht die Aufgabe der Erfindung in der Eliminierung/Reduzierung von toxischen Schwermetallionen und die Verwertung von Schadstoffen aus wässrigen, hoch konzentrierten säure-, schwefel- und schwermetallhaltigen Lösungen, sowie der Sicherstellung einer hohen Sulfidproduktivität der Sulfat reduzierenden Bakterien (SRB).

Zur Lösung der Aufgabe wird ein Verfahren zur Entfernung von Schwermetallionen aus hoch konzentrierten, schwermetallhaltigen und stark sauren Lösungen mit einem Anteil an Sulfat vorgeschlagen,
- wobei die Lösung in mindestens zwei Teilströme aufgeteilt wird,
- wobei der erste Teilstrom unbehandelt einem zweiten Mischbehälter (MB2) zugeführt wird,
- wobei der zweite Teilstrom den Zulauf eines Bioreaktors (BioR) bildet;
- wobei in dem Bioreaktor (BioR) der Sulfatanteil des zweiten Teilstroms mittels Sulfat reduzierender Bakterien in Sulfide überführt wird;
- wobei nach dem Bioreaktor (BioR) der zweite Teilstrom mit den Sulfiden einem ersten Mischbehälter (MB1) zugeführt wird;
- wobei mittels eines Trägergases im ersten Mischbehälter (MB1) befindlicher Schwefelwasserstoff (H₂S) dem zweiten Mischbehälter (MB2) zugeführt wird,
- wobei als Trägergas ein inertes Gas oder Luft verwendet wird;
- wobei dem zweiten Mischbehälter (MB2) ein Fällungsreaktor (FR4) zur Fällung von Metallsulfiden nachgeordnet ist;
- wobei aus dem Fällungsreaktor (FR4) im Wesentlichen reine Schwefelsäure (H₂S0₄) abgezogen wird. Da H₂S bereits unmittelbar im Bioreaktor entsteht, wäre insofern denkbar, dieses H₂S unmittelbar aus dem Bioreaktor in den zweiten Mischbehälter zu überführen. Nachteilig hierbei ist allerdings, dass dem Bioreaktor insofern H₂ entzogen wird. H₂ wird allerdings von den Bakterien im Bioreaktor während des anaeroben
Prozesses benötigt. Würde jedoch insofern Wasserstoff dem Bioreaktor entzogen, dann leidet insgesamt die Produktivität des Bioreaktors insofern, als weniger H₂S zur Verfügung steht, was zur Folge hat, dass weniger Sulfat in Sulfid umgewandelt wird, was wiederum zur Folge hat, dass der Sulfatanteil im Abwasser steigt.

Der der Erfindung zugrunde liegende Gedanke besteht demzufolge darin, den Schwefelwasserstoff (H₂S) erst in dem dem Bioreaktor nachgeschalteten ersten Mischbehälter (MB1) zu verwerten. Insofern ist - wie bereits an anderer Stelle ausgeführt - vorgesehen, dass der Schwefelwasserstoff aus dem dem Bioreaktor unmittelbar nachgeschalteten Mischbehälter (MB1) mittels eines Trägergases ausgetrieben wird, und in einen zweiten Mischbehälter (MB2) überführt wird. Als Trägergas kann hierbei insbesondere ein inertes Gas, z. B. Stickstoff, fungieren, wobei festzuhalten ist, dass das Verfahren auch unter Verwendung von Luft funktioniert. Die Folge der Zuführung von Schwefelwasserstoff in den zweiten Mischbehälter (MB2), dem ansonsten hoch konzentrierte, schwermetallhaltige Lösung in Form eines Anteils an Abwasser zugeführt wird, ist, dass sich im Mischbehälter (MB2) Metallsulfide bilden, die in einem nachgeordneten Fällungsreaktor (FR4) ausgefällt werden können, aber, was noch wesentlicher ist, dem Fällungsreaktor (FR4) im Wesentlichen reine Schwefelsäure (H₂SO₄) entnommen werden kann.

Vorteilhaft ist weiterhin, dass ein Teil des Ablaufes aus dem Bioreaktor einem dem Bioreaktor vorgeschalteten Fällungsreaktor (FR1) zurückgeführt wird, um durch die Zufuhr von Sulfiden die Fällung von Schwermetallen hervorzurufen. Hieraus wird deutlich, dass H₂S in den Fällungsreaktor (FR1) transportiert wird, um das zur Fällung erforderliche Sulfid bereitzustellen. Das heißt, in dem dem Bioreaktor vorgeschalteten Fällungsreaktor (FR1) erfolgt die Fällung von Schwermetallen, was keine negative Auswirkung auf die SRBs hat.

Nach einem weiteren Merkmal der Erfindung ist vorgesehen, dass im ersten Mischbehälter (MB1) eine Einstellung des pH-Wertes auf einen Bereich von 4 bis 6, vorteilhaft jedoch von 5,0 dadurch erfolgt, dass ein Teil des sauren Abwassers unmittelbar dem ersten Mischbehälter (MB1) zugeführt wird. Durch diese Einstellung des pH-Wertes wird das Ausstrippen von H₂S begünstigt.

Nach einem weiteren Merkmal zeichnet sich die Erfindung dadurch aus, dass die aus einem dem ersten Mischbehälter (MB1) nachgeordneten Fällungsreaktor (FR3) abgezogene Lösung einem dem Bioreaktor unmittelbar vorgeschalteten Mischbehälter (MB3) zugeführt wird. Diesem Mischbehälter (MB3) ist ein Fällungsreaktor (FR2) nachgeschaltet. Das Abwasser aus dem Fällungsreaktor (FR2) ist mit einem pH-Wert von etwa 6 bis 8, insbesondere 7 im Wesentlichen neutral. Dies bewirkt, dass die Schwermetalle, die einen höheren pH-Wert für die Ausfällung brauchen, bevor sie in den Bioreaktor gelangen, ausgefällt werden.

Vorteilhaft ist vorgesehen, dass die dem Bioreaktor vorgeschalteten Fällungsreaktoren (FR1, FR2) hintereinander geschaltet sind, wobei - wie bereits ausgeführt - im ersten Fällungsreaktor zunächst Metallsulfide und im zweiten Fällungsreaktor Metalloxide ausgefällt werden. Dem Mischbehälter (MB3) werden darüber hinaus Nährstoffe in Form von Glyzerin zugesetzt, um die Sulfat reduzierenden Bakterien im Bioreaktor mit entsprechender Nahrung zu versorgen.

Außerdem wird die Aufgabe gelöst durch eine Vorrichtung zum Entfernen von Schwermetallionen aus hoch konzentrierten, schwermetallhaltigen und stark sauren Lösungen mit einem Anteil an Sulfat, mit
- Mitteln zum Aufteilen der Lösung in mindestens zwei Teilströme,
- wobei Mittel vorgesehen sind, mit denen der erste Teilstrom unbehandelt einem zweiten Mischbehälter (MB2) zugeführt werden kann, und
- wobei der zweite Teilstrom den Zulauf eines Bioreaktors (BioR) bildet;
- wobei der Bioreaktor (BioR) Sulfat reduzierende Bakterien enthält;
- wobei Mittel vorgesehen sind, mit denen der zweite Teilstrom nach dem Bioreaktor (BioR) einem ersten Mischbehälter (MB1) zugeführt werden kann;
- wobei Mittel vorgesehen sind, mit denen mittels eines Trägergases im ersten Mischbehälter (MB1) befindlicher Schwefelwasserstoff (H2S) dem zweiten Mischbehälter (MB2) zugeführt werden kann,
- wobei als Trägergas ein inertes Gas oder Luft verwendet wird;
- wobei dem zweiten Mischbehälter (MB2) ein Fällungsreaktor (FR4) zur Fällung von Metallsulfiden nachgeordnet ist; und
- Mitteln zum Abziehen von im Wesentlichen reiner Schwefelsäure (H₂SO₄) aus dem Fällungsreaktor (FR4).
Anhand des Prozessschemas wird das erfindungsgemäße Verfahren nachstehend näher erläutert.

Es liegt ein hoch konzentriertes, schwermetallhaltiges Abwasser in stark sauerer Form vor. Ein Teil des Abwassers wird dem Mischbehälter 2 zugeführt, und ein Teil des Abwassers dem Fällungsreaktor 1. Ein weiterer Teil des Abwassers wird dem Mischbehälter 1 zugeführt.

Die Aufteilung der Volumenströme ist hierbei derart, dass der größere Teil des Abwassers dem Mischbehälter (MB2) zugeführt wird, und der geringerer Teil des Abwassers dem Fällungsreaktor (FR1). Dem Fällungsreaktor (FR1) wird darüber hinaus aus dem Ablauf des Bioreaktors Schwefelwasserstoff (H₂S) zugeführt, so dass in dem Fällungsreaktor (FR1) Metallsulfide (MeS) ausfällen. Das Abwasser aus dem Fällungsreaktor (FR1) wird dem Mischbehälter (MB3) zugeführt. In den Mischbehälter werden NaOH zur Einstellung des pH-Wertes und des Nährstoffes eingeleitet, beispielsweise in Form von Glyzerin. Ein Teil des ablaufenden Abwassers wird dem Mischbehälter (MB3) zugeführt, um die Zufuhr von NaOH zu vermindern. Die Folge hiervon ist, dass Metalloxide ausgefällt werden und dem Bioreaktor ein ausreichender Zulauf gesichert wird. Der aus dem Fällungsreaktor (FR2) austretende Ablauf ohne Schwermetalle wird dann dem Bioreaktor zugeleitet. Im Bioreaktor findet durch die Sulfat reduzierenden Bakterien die Reduzierung des Sulfatanteils statt. Die aus dem Bioreaktor austretenden Sulfide werden einem Mischbehälter (MB1) zugegeben, wobei in den Mischbehälter (MB1) ein Gas, insbesondere ein inertes Gas, z. B. Stickstoff, eingeführt wird, das als Trägergas für den Transport von Schwefelwasserstoff aus dem Mischbehälter (MB1) in den Mischbehälter (MB2) dient. In dem Mischbehälter (MB1) wird darüber hinaus ein Teil des zu reinigenden Abwassers eingeleitet, das für eine optimale Einstellung des pH-Wertes für das Ausrippen in einem Bereich zwischen 4 und 6, insbesondere 5 sorgt. Es hat sich herausgestellt, dass bei einem pH-Wert unter von 5,5 der Austrieb von Schwefelwasserstoff aus dem Mischbehälter (MB1) in den Mischbehälter (MB2) besonders gut funktioniert. Aus dem Mischbehälter 1 wird das Abwasser in den Fällungsreaktor 3 ausgetragen, in dem Metallsulfid gefällt wird. Von Schwermetallen gereinigtes Abwasser wird teilweise in den Mischbehälter (MB3) rezirkuliert.

Wie bereits an anderer Stelle erläutert, wird das Abwasser aus dem Fällungsreaktor (FR3) dem nachgeschalteten Mischbehälter (MB3) zugeleitet, wobei darauf hingewiesen wird, dass dieses Abwasser mit einem pH-Wert von 5,5 relativ nahe an dem neutralen pH-Wert von 7 liegt. Die Folge hiervon ist, dass nicht übermäßig viel NaOH in den Fällungsreaktion eingeführt werden muss, was ansonsten zur Neutralisierung des pH-Wertes notwendig wäre, wie dies bereits beschrieben wurde.

Wie bereits ebenfalls an anderer Stelle erläutert, wird ein Teil des hoch konzentrierten Abwassers, und zwar der überwiegende Teil, dem Mischbehälter (MB2) zugeführt. Es wurde ebenfalls darauf hingewiesen, dass dem Mischbehälter (MB2) Schwefelwasserstoff (H₂S) aus dem Mischbehälter 1 zugeführt wird, und zwar mit Hilfe eines Trägergases, z. B. Stickstoff. Dieses Trägergas wird aus dem Mischbehälter (MB2) wieder in den Mischbehälter (MB1) geführt, um dort weiterhin für den Austrag von Schwefelwasserstoff zu sorgen. Die aus dem Mischbehälter (MB2) austretende Lösung wird einem Fällungsreaktor (FR4) zugeführt, aus dem einerseits Schwermetallionen ausgeschieden werden, und andererseits Schwefelsäure (H₂SO₄) in reiner Form produziert und abgezogen werden kann.

Die Vorteile, die mit diesem erfindungsgemäßen Verfahren verwirklicht werden können, bestehen somit in der Entfernung von Schwermetallionen aus hoch konzentrierten, schwermetallhaltigen und stark sauren Abwassern sowie einer Sulfatreduktion. Vorteilhaft ist darüber hinaus auch die Gewinnung weiterer Stoffe aus dem Abwasser, nämlich insbesondere Schwefelsäure (H₂SO₄). Zur Gewinnung von Schwefelsäure und auch für die Funktion des Bioreaktors ist eine besondere Chemikalienzugabe nach diesem Verfahren nicht erforderlich, was eine Aufsalzung des Abwassers verhindert. Insbesondere ist die Zufuhr von anorganischen Sulfiden, z. B. Schwefelwasserstoff, Natriumsulfid, nicht erforderlich, die nicht nur in der Lagerung und Handhabung kompliziert sind, sondern darüber hinaus auch teuer sind.

### zitierte Literatur

zitierte Patentliteratur
WO 80/02281 A1
JP-A-6034706
WO 97/29055 A1
EP 1 587 697 B1

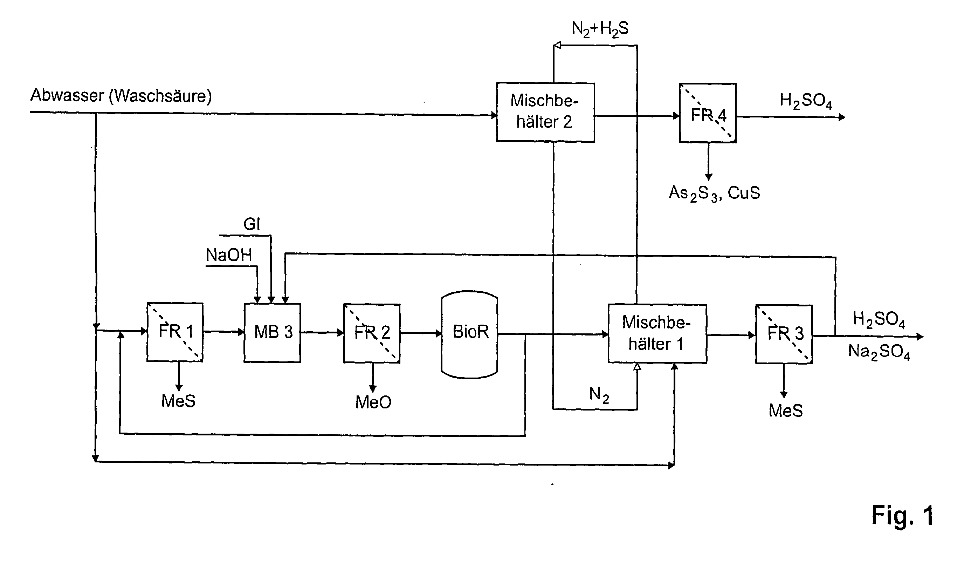

## Patentansprüche

1. Verfahren zur Entfernung von Schwermetallionen aus hoch konzentrierten, schwermetallhaltigen und stark sauren Lösungen mit einem Anteil an Sulfat,
a) wobei die Lösung in mindestens zwei Teilströme aufgeteilt wird,
a1) wobei der erste Teilstrom unbehandelt einem zweiten Mischbehälter (MB2) zugeführt wird,
a2) wobei der zweite Teilstrom den Zulauf eines Bioreaktors (BioR) bildet;
b) wobei in dem Bioreaktor (BioR) der Sulfatanteil des zweiten Teilstroms mittels Sulfat reduzierender Bakterien in Sulfide überführt wird;
c) wobei nach dem Bioreaktor (BioR) der zweite Teilstrom mit den Sulfiden einem ersten Mischbehälter (MB1) zugeführt wird;
d) wobei mittels eines Trägergases im ersten Mischbehälter (MB1) befindlicher Schwefelwasserstoff (H₂S) dem zweiten Mischbehälter (MB2) zugeführt wird,
d1) wobei als Trägergas ein inertes Gas oder Luft verwendet wird;
e) wobei dem zweiten Mischbehälter (MB2) ein Fällungsreaktor (FR4) zur Fällung von Metallsulfiden nachgeordnet ist;
f) wobei aus dem Fällungsreaktor (FR4) im Wesentlichen reine Schwefelsäure (H₂SO₄) abgezogen wird.

2. Verfahren nach Anspruch 1,
**dadurch gekennzeichnet,**
**dass** ein Teil des Ablaufs aus dem Bioreaktor einem dem Bioreaktor vorgeschalteten Fällungsreaktor (FR1) zugeführt wird, um durch die Zufuhr von Sulfiden die Fällung von Metallsulfiden zu bewirken.

3. Verfahren nach einem der voranstehenden Ansprüche,
**dadurch gekennzeichnet,**
**dass** im Mischbehälter (MB1) eine Einstellung des pH-Wertes auf einen Bereich zwischen 4 und 6 dadurch erfolgt, dass ein Teil der sauren Lösung unmittelbar dem Mischbehälter (MB1) zugeführt wird.

4. Verfahren nach einem der voranstehenden Ansprüche,
**dadurch gekennzeichnet,**
**dass** die aus einem dem ersten Mischbehälter (MB1) nachgeschalteten Fällungsreaktor (FR3) abgezogene Lösung einem dem Bioreaktor (BioR) vorgeschalteten Mischbehälter (MB3) zugeführt wird.

5. Verfahren nach Anspruch 2 und 4,
**dadurch gekennzeichnet,**
**dass** der Fällungsreaktor (FR1), der Mischbehälter (MB3) und ein weiterer Fällungsreaktor (FR2) hintereinander geschaltet sind.

6. Verfahren nach Anspruch 4,
**dadurch gekennzeichnet,**
**dass** dem Mischbehälter (MB3) Glyzerin zugeführt wird.

7. Vorrichtung zum Entfernen von Schwermetallionen aus hoch konzentrierten, schwermetallhaltigen und stark sauren Lösungen mit einem Anteil an Sulfat, mit:
a) Mitteln zum Aufteilen der Lösung in mindestens zwei Teilströme,
a1) wobei Mittel vorgesehen sind, mit denen der erste Teilstrom unbehandelt einem zweiten Mischbehälter (MB2) zugeführt werden kann, und
a2) wobei der zweite Teilstrom den Zulauf eines Bioreaktors (BioR) bildet;
b) wobei der Bioreaktor (BioR) Sulfat reduzierende Bakterien enthält;
c) wobei Mittel vorgesehen sind, mit denen der zweite Teilstrom nach dem Bioreaktor (BioR) einem ersten Mischbehälter (MB1) zugeführt werden kann;
d) wobei Mittel vorgesehen sind, mit denen mittels eines Trägergases im ersten Mischbehälter (MB1) befindlicher Schwefelwasserstoff (H₂S) dem zweiten Mischbehälter (MB2) zugeführt werden kann,
d1) wobei als Trägergas ein inertes Gas oder Luft verwendet wird;
e) wobei dem zweiten Mischbehälter (MB2) ein Fällungsreaktor (FR4) zur Fällung von Metallsulfiden nachgeordnet ist; und
f) Mitteln zum Abziehen von im Wesentlichen reiner Schwefelsäure (H₂SO₄) aus dem Fällungsreaktor (FR4).

## Claims

1. Method for removing heavy metal ions from highly concentrated, heavy metal-containing and strongly acidic solutions with a sulfate content,
a) wherein the solution is split into at least two partial streams,
a1) wherein the first partial stream is introduced untreated into a second mixing vessel (MB2),
a2) wherein the second partial stream forms the inflow of a bioreactor (BioR);
b) wherein the sulfate content of the second partial stream is converted to sulfides by means of sulfate-reducing bacteria in the bioreactor (BioR);
c) wherein the second partial stream with the sulfides is introduced into a first mixing vessel (MB1) after the bioreactor (BioR);
d) wherein hydrogen sulfide (H₂S) located in the first mixing vessel (MB1) is introduced into the second mixing vessel (MB2) by means of a carrier gas,
d1) wherein an inert gas or air is used as carrier gas;
e) wherein a precipitation reactor (FR4) for the precipitation of metal sulfides is disposed downstream of the second mixing vessel (MB2);
f) wherein substantially pure sulfuric acid (H₂SO₄) is withdrawn from the precipitation reactor (FR4).

2. Method according to claim 1,
**characterized**
**in that** a part of the outflow of the bioreactor is introduced into a precipitation reactor (FR1) disposed upstream of the bioreactor to effect the precipitation of metal sulfides by supplying sulfides.

3. Method according to one of the preceding claims,
**characterized**
**in that** an adjustment of the pH value in the mixing vessel (MB1) to a range between 4 and 6 takes place by directly introducing a part of the acidic solution into the mixing vessel (MB1).

4. Method according to one of the preceding claims,
**characterized**
**in that** the solution withdrawn from a precipitation reactor (FR3) disposed downstream of the first mixing vessel (MB1) is introduced into a mixing vessel (MB3) disposed upstream of the bioreactor (BioR).

5. Method according to claims 2 and 4,
**characterized**
**in that** the precipitation reactor (FR1), the mixing vessel (MB3) and a further precipitation reactor (FR2) are connected in series.

6. Method according to claim 4,
**characterized**
**in that** glycerine is introduced into the mixing vessel (MB3).

7. Device for removing heavy metal ions from highly concentrated, heavy metal-containing and strongly acidic solutions with a sulfate content, with:
a) means for splitting the solution into at least two partial streams,
a1) wherein means are provided by which the first partial stream can be introduced untreated into a second mixing vessel (MB2), anda2) wherein the second partial stream forms the inflow of a bioreactor (BioR);
b) wherein the bioreactor (BioR) contains sulfate-reducing bacteria;
c) wherein means are provided for introducing the second partial stream into a first mixing vessel (MB1) after the bioreactor (BioR);
d) wherein means are provided by which hydrogen sulfide (H₂S) located in the first mixing vessel (MB1) can be introduced into the second mixing vessel (MB2) by means of a carrier gas,
d1) wherein an inert gas or air is used as carrier gas;
e) wherein a precipitation reactor (FR4) for the precipitation of metal sulfides is disposed downstream of the second mixing vessel (MB2); and
f) means for withdrawing substantially pure sulfuric acid (H₂SO₄) from the precipitation reactor (FR4).

## Revendications

1. Procédé servant à éliminer des ions de métaux lourds de solutions hautement concentrées, contenant des métaux lourds et fortement acides, comprenant une fraction de sulfate,
a) dans lequel la solution est divisée en au moins deux flux partiels
a1) dans lequel le premier flux partiel est amené non traité à un deuxième récipient de mélange (MB2), a2) dans lequel le deuxième flux partiel forme le flux entrant d'un bioréacteur (BioR) ;
b) dans lequel la fraction de sulfate du deuxième flux partiel est transformée en sulfures au moyen de bactéries réduisant le sulfate dans le bioréacteur (BioR) ;
c) dans lequel le deuxième flux partiel contenant les sulfures est amené, après le bioréacteur (BioR), à un premier récipient de mélange (MB1) ;
d) dans lequel le sulfure d'hydrogène (H₂S) se trouvant dans le premier récipient de mélange (MB1) est amené, au moyen d'un gaz porteur, au deuxième récipient de mélange (MB2) ;
d1) dans lequel on utilise comme gaz porteur un gaz inerte ou de l'air ;
e) dans lequel un réacteur de précipitation (FR4) servant à la précipitation des sulfures métalliques est disposé en aval du deuxième récipient de mélange (MB2) ;
f) dans lequel des acides sulfuriques essentiellement purs (H₂SO₄) sont extraits du réacteur de précipitation (FR4).

2. Procédé selon la revendication 1,
**caractérisé en ce**
**qu'**une partie du flux sortant provenant du bioréacteur est amenée au réacteur de précipitation (FR1) installé en amont du bioréacteur, pour provoquer par l'amenée de sulfures la précipitation de sulfures métalliques.

3. Procédé selon l'une quelconque des revendications précédentes,
**caractérisé en ce**
**qu'**un réglage de la valeur pH est effectué dans le récipient de mélange (MB1) sur une plage allant de 4 à 6, en ce qu'une partie de la solution acide est amenée directement au récipient de mélange (MB1).

4. Procédé selon l'une quelconque des revendications précédentes,
**caractérisé en ce**
**que** la solution extraite d'un réacteur de précipitation (FR3) installé en aval du premier récipient de mélange (MB1) est amenée au récipient de mélange (MB3) installé en amont du bioréacteur (BioR).

5. Procédé selon la revendication 2 et la revendication 4,
**caractérisé en ce**
**que** le réacteur de précipitation (FR1), le récipient de mélange (MB3) et un autre réacteur de précipitation (FR2) sont installés les uns derrière les autres.

6. Procédé selon la revendication 4,
**caractérisé en ce**
**que** de la glycérine est amenée au récipient de mélange (MB3).

7. Dispositif servant à éliminer des ions de métaux lourds de solutions hautement concentrées, contenant des métaux lourds et fortement acides, comprenant une fraction de sulfate, ledit dispositif comprenant :
a) des moyens servant à diviser la solution en au moins deux flux partiels ;
a1) dans lequel des moyens sont prévus, avec lesquels le premier flux partiel peut être amené non traité à un deuxième récipient de mélange (MB2), et
a2) dans lequel le deuxième flux partiel forme le flux entrant d'un bioréacteur (BioR) ;
b) dans lequel le bioréacteur (BioR) contient des bactéries réduisant le sulfate ;
c) dans lequel sont prévus des moyens, avec lesquels le deuxième flux partiel peut être amené après le bioréacteur (BioR) à un premier récipient de mélange (MB1) ;
d) dans lequel sont prévus des moyens, avec lesquels le sulfure d'hydrogène (H₂S) se trouvant dans le premier récipient de mélange (MB1) peut être amené au deuxième récipient de mélange (MB2) au moyen d'un gaz porteur,
d1) dans lequel on utilise comme gaz porteur un gaz inerte ou de l'air ;
e) dans lequel un réacteur de précipitation (FR4) servant à la précipitation des sulfures métalliques est disposé en aval du deuxième récipient de mélange (MB2) ; et
f) des moyens servant à extraire de l'acide sulfurique (H₂SO₄) essentiellement pur du réacteur de précipitation (FR4).
